# EUROPEAN PATENT APPLICATION

(11) **EP 4 667 177 A1**
(43) Date of publication of application: **24.12.2025**
(21) Application number: 24756726.6
(22) Date of filing: 05.02.2024
(51) Int. Cl.: B29B 9/06, B29C 48/345, B29C 48/355

(54) **METHOD FOR PRODUCING RESIN PELLETS**

(30) Priority: 13.02.2023 JP 2023019811
(71) Applicant: Mitsubishi Engineering-Plastics Corporation, Tokyo 105-0021 (JP); GLOBAL POLYACETAL CO., LTD., Tokyo 105-0021 (JP); Mitsubishi Chemical Corporation, Tokyo 100-8251 (JP)
(72) Inventor: TAJIRI, Toshiyuki, Hiratsuka-shi, Kanagawa 254-0016 (JP)
(74) Representative: Müller-Boré & Partner Patentanwälte PartG mbB
(86) International application number: PCT/JP2024/003749
(87) International publication number: WO 2024/171876

(57) **Abstract**

Resin pellets having a small aspect ratio are produced uniformly without variation by: using a horizontal flat die at a front end of an extruder to allow a thermoplastic resin composition to be extruded therefrom in the form of a strand; allowing the strand through a die hole at an end of the flat die to have a temperature lower than the strand through a die hole in the center of the flat die by 4°C to 14°C; setting the distance between the die hole and a position C where the strand comes in contact with a first guide roller (an A-C distance) to 7 to 30 cm; and setting the distance between a position B where the strand reaches the water surface and the position C (a B-C distance) to be 10% to 60% of the A-C distance.

## Description

### Technical Field

The present invention relates to a production method for resin pellets and to a productive method for producing pellets having a highly circular cross-section, i.e., a small aspect ratio, from a thermoplastic resin or a composition containing a thermoplastic resin and a reinforcing material.

### Background Art

To manufacture resin pellets, raw materials such as resin and additives are placed in a tank or hopper, and then a predetermined amount is measured by a feeder and fed to an extruder. The raw materials in the extruder are then mixed, heated and melted, and extruded in the form of strands from the nozzle of the die at the tip of the extruder. The resulting resin strands are introduced into a cooling water bath, cooled and solidified, and then cut into a specified length by a pelletizer to form pellets.

The pellets obtained by the pelletizer then go through multiple post-processes, such as a pellet cooler, a screener, a magnetic roll separator, and a device for adding a lubricant to the pellets. The pellets are required to pass through these post-processes smoothly without being retained. If the pellets have an elliptic columnar shape with a large aspect ratio, they are prevented from rotating in the direction of the elliptic cross-section, whereby they can move less smoothly than cylindrical pellets with high circularity and thus are retained in the post-processes, resulting in a decrease in productivity. In order for the pellets to move smoothly without being retained in the post-processes, they need to have a small aspect ratio, which is preferably 0.2 or less, more preferably 0.15 or less, and still more preferably 0.1 or less.

The aspect ratio is a value that represents how flat (crushed) the elliptic cross-section of an elliptic columnar pellet is, compared with a perfectly circular cross-section. The aspect ratio is defined as follows: Aspect ratio (f) = (a-b)/a, **i.e., 1-**b/a, where "a" is a major radius and "b" is a minor radius of an ellipse. The aspect ratio of a cylindrical pellet having a perfectly circular cross-section is 0 and approaches 1 as the cross-section is crushed.

It is preferable for any pellets, regardless of the types of a thermoplastic resin and a reinforcing material, to have a small aspect ratio, as it makes the pellets less likely to be retained in the post-processes. Also, in recent years, there has been a strong demand for uniformly shaped pellets, because, for example, if pellets for use as a material for injection molding vary in shape, they cannot be measured stably, impairing the stable operation of an injection molding machine.

### Summary of Invention

### Technical Problem

An object (purpose) of the present invention is to produce pellets having a small aspect ratio uniformly without variation. Solution to Problem

As a result of intensive studies for achieving the above-described object, the present inventors have found that resin pellets having a small aspect ratio can be produced uniformly without variation by: using a horizontal flat die; allowing a strand through a die hole at an end of the flat die to have a temperature lower than the strand through a die hole in the center of the flat die by 4°C to 14°C; setting the distance between the die hole and a position where the strand comes in contact with a first guide roller provided below the water surface in a cooling water bath to 7 to 30 cm; and setting the distance between a point where the strand enters water and the position where the strand comes in contact with the first guide roller to be within a specific range, whereby the strand is prevented from being flattened due to its vibration and tension difference.

The present invention relates to a production method for resin pellets as described below.
1. A production method for resin pellets, comprising: extruding a thermoplastic resin or a composition containing a thermoplastic resin and a reinforcing filler from a die at a front end of an extruder in a form of a strand; introducing the strand into a water bath provided with a guide roller so that it is cooled; and cutting the cooled strand into resin pellets, wherein
   the die is a horizontal flat die, and the strand through a die hole at an end of the flat die has a temperature lower than the strand through a die hole in a center of the flat die by 4°C to 14°C, and
   a distance between a center position A of the die hole in the center of the flat die and a position C where the strand comes in contact with a first guide roller (an A-C distance) is 7 to 30 cm, and a distance between a position B where the strand reaches a water surface and the position C (a B-C distance) is within a range of 10% to 60% of the A-C distance.
2. The production method of 1 above, wherein the water bath is provided with a second guide roller downstream of the first guide roller such that the second guide roller is located deeper than the first guide roller in the water bath.
3. The production method of 1 or 2 above, wherein a distance between the position C and a position D where the strand comes in contact with the second guide roller is 4 to 30 cm.
4. The production method of any one of 1 to 3 above, wherein the strand forms an angle of 130° or more and less than 180° before and after the first guide roller.
5. The production method of any one of 1 to 4 above, wherein the thermoplastic resin is a crystalline thermoplastic resin.
6. A resin pellet produced by the production method of any one of 1 to 5 above.

### Advantageous Effects of Invention

According to the production method of the present invention, resin pellets having a small aspect ratio can be produced uniformly without variation. The resultant pellets can be measured accurately for use in injection molding or the like and thus be molded stably.

### Brief Description of Drawings

[Fig. 1]

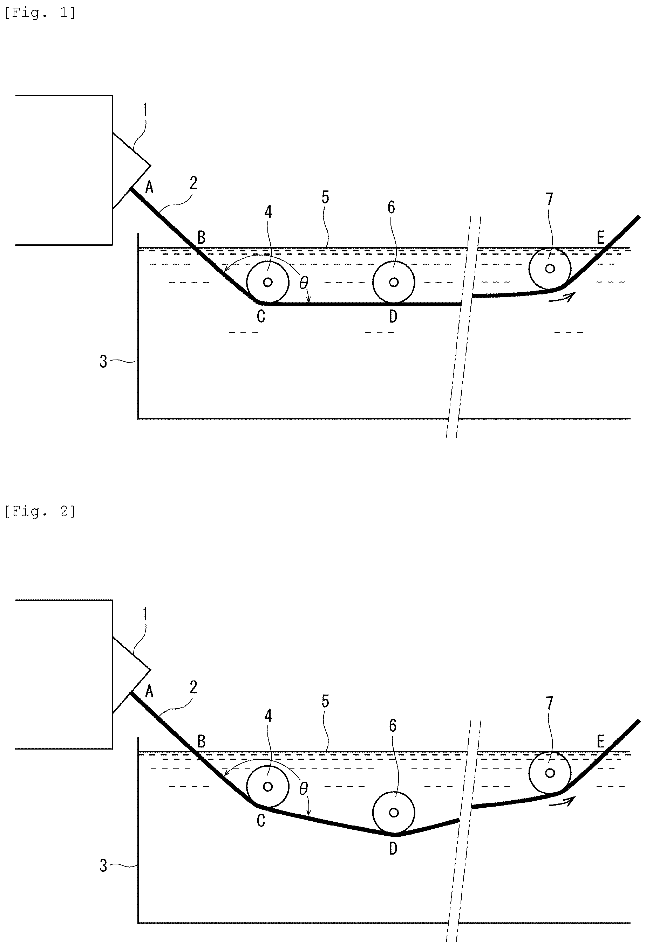

   Fig. 1 is a conceptual view showing an example of a water-cooling step in the present invention.
[Fig. 2]
   Fig. 2 is a conceptual view showing another example of the water-cooling step in the present invention.
[Fig. 3]

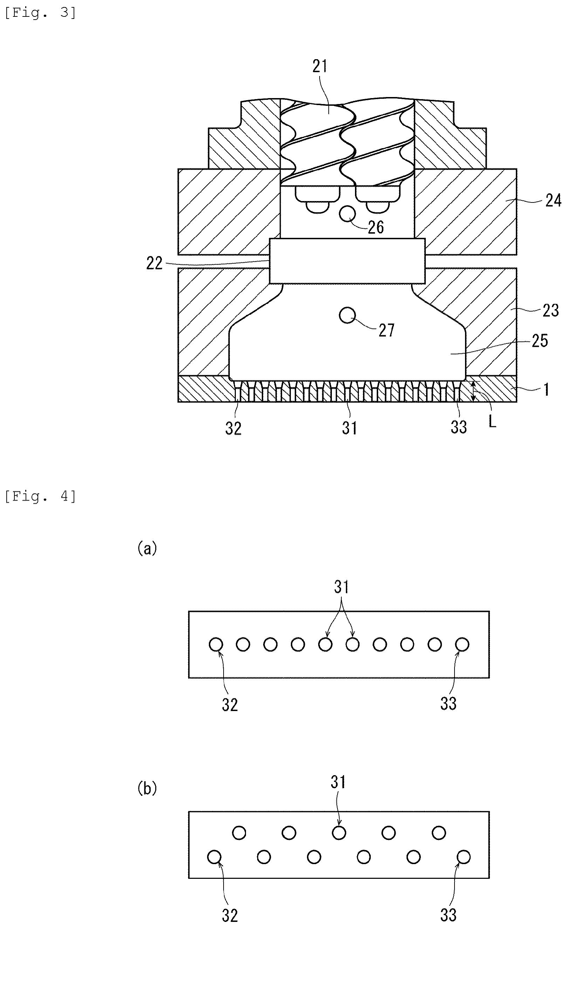

   Fig. 3 is a view showing an example of a die portion of an extruder for use in the present invention.
[Figs. 4]
   Figs. 4 are cross-sectional views showing examples of a horizontal flat die for use in the present invention.
[Figs. 5]

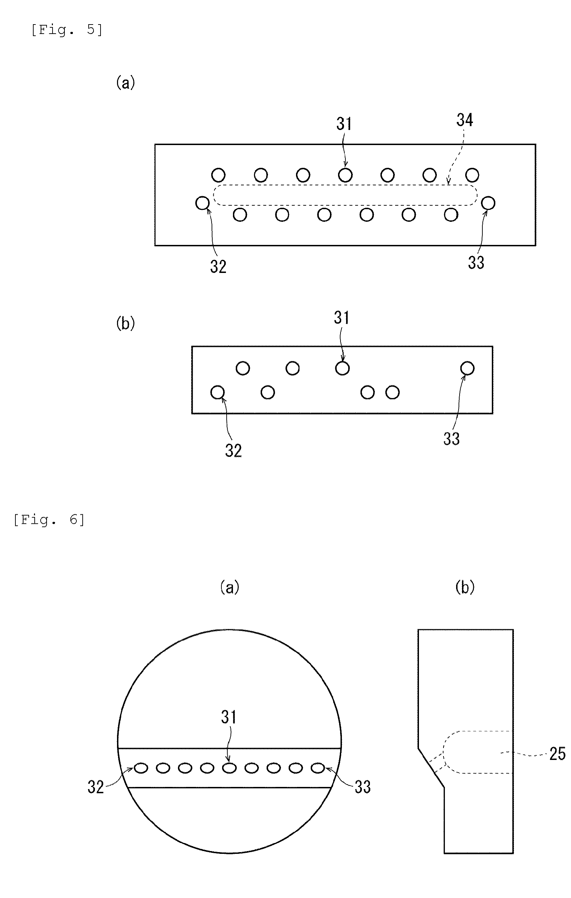

   Figs. 5 are cross-sectional views showing other examples of the horizontal flat die for use in the present invention.
[Figs. 6]
   Figs. 6 are cross-sectional views showing still another example of the horizontal flat die for use in the present invention.
[Fig. 7]

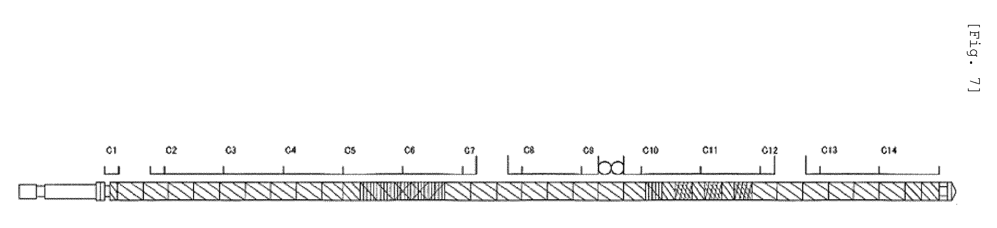

   Fig. 7 is a conceptual view of the screw configuration of an extruder used in examples or comparative examples.

### Description of Embodiments

Hereinafter, the present invention will be described in detail by way of an embodiment, an example, and the like, but the present invention is not limited to the embodiment, the example, and the like described below, and any modifications can be made within the scope of the gist of the present invention.

A production method of the present invention includes: extruding a thermoplastic resin or a composition containing a thermoplastic resin and a reinforcing filler from a die at a front end of an extruder in the form of a strand; introducing the strand into water in a water bath provided with a guide roller so that it is cooled; and cutting the cooled strand into resin pellets.

The extruder for use in the present invention may be a single screw extruder, but is preferably a twin screw extruder, more preferably a vented twin screw extruder, and still more preferably a intermeshing co-rotating vented twin screw extruder in which two screws rotating in the same direction are provided in a barrel and kneading portions each composed of a plurality of kneading discs are provided in an intermeshing manner in the middle of the screws.

In the present invention, the die at the front end of the extruder is a horizontal flat die, and the strand through a die hole at an end of the flat die has a temperature lower than the strand through a die hole in the center of the flat die by 4°C to 14°C.

Fig. 3 is a view showing an example of a die portion of the extruder for use in the present invention when viewed in cross-section along a surface parallel to the bottom surface of the die portion.

A molten resin composition is conveyed from screws 21 of the twin screw extruder into the die portion. The die portion is composed of a breaker plate 22 (or a ring plate), a die holder 23, a flange 24, a manifold portion 25, and a horizontal flat die 1. The die holder may be referred to as a die plate, and the flange may be referred to as a hinge plate depending on the situation. The combination of the flange 24 (or the hinge plate) and the die holder 23 (or the die plate) is commonly referred to as a die head.

The flange and the manifold portion have a thermocouple 26 and a thermocouple 27, respectively, so that the temperatures of the flange and the die holder can be measured. Further, a cylinder, the flange, and the die holder have a built-in heater for temperature control.

The breaker plate 22 can be equipped with a screen mesh.

The breaker plate 22 includes a desired number of holes each having a desired diameter and a desired land length. In the absence of a screen mesh, the breaker plate 22 in the form of a ring, or a ring plate, is usually used. In examples and comparative examples of the present application, a ring plate was used. The breaker plate or ring plate serves to prevent resin leakage.

The horizontal flat die 1 has die holes 31, 32, 33 that are arranged horizontally.

Figs. 4 to 6 are cross-sectional views showing examples of the horizontal flat die 1. The horizontal flat die is a die having die holes 31, 32, 33 arranged horizontally, for example, in a row as shown in Fig. 4(a), in a zigzag manner as shown in Fig. 4(b), or in two (upper and lower) rows as shown in Fig. 5(a). Alternatively, the horizontal flat die may have a round overall shape as shown in Figs. 6(a) and 6(b), as long as the die holes 31, 32, 33 extending from the manifold portion 25 are arranged horizontally. All of these examples are preferred embodiments of the present invention.

In a case where the die holes are arranged horizontally in two rows, i.e., upper and lower rows, as shown in Fig. 5(a), the die holes 32 and 33 at ends are often located on the lower side of the upper die holes and on the upper side of the lower die holes. This arrangement allows a separation plate 34 to be provided between the upper and lower die holes of the horizontal flat die so that a resin flow path is divided into upper and lower parts.

The temperature of the strand through the die hole in the center of the horizontal flat die (this may also be referred to as the strand temperature in the die center) refers to the temperature of the strand just extruded through the die hole 31, which is closest to the geometric center when viewed from the front of the die. In a case where an odd number of die holes are arranged horizontally at regular intervals, the strand temperature in the die center is the temperature of the strand just extruded through the die hole in the center of the die. In a case where an even number of die holes are arranged, the strand temperature in the die center is defined as the average temperature of two strands just extruded through the two die holes in the center of the die.

The strand temperature in the die center can be measured directly with a thermocouple brought into contact with the strand. Alternatively, the strand temperature can also be measured with an infrared temperature measuring instrument. The strand temperature in the die center is presumably close to the temperature of the resin inside the die.

The temperature of the strand through the die hole at an end of the horizontal flat die (this may also be referred to as the strand temperature at a die end) refers to the temperature of the strand through each of the die holes 32 and 33 at both (left and right) ends of the die when viewed from the front of the die. In a case where the strand has a different temperature between the left and right ends, the strand temperature at a die end is defined as their average temperature.

In a case where the die holes are arranged horizontally at random as shown in Fig. 5(b), each of the die holes 32 and 33 at the left and right ends of the flat die is the die hole at an end, and the die hole 31, which is closest to the geometric center when viewed from the front of the die, is the die hole in the center of the die. The horizontal flat die 1 is a die having horizontally arranged die holes and is typically positioned at the front end of the manifold portion 25 where the flow path of the resin extends horizontally in the die holder. The die holes need not have the same diameter d and the same land length L, but may be different in diameter d and land length L from one another.

Besides the horizontal flat die, there is a so-called circular die, which is a round-shaped die having die holes arranged circularly on its inner circumference. However, such a circular die is required to have a larger number of die holes to achieve high discharge, becoming larger in diameter. Then, a strand extruded through die holes on an upper circumference has to travel longer distance before reaching the water bath, resulting in a flattened and unstable strand that breaks easily. In view of this, a circular die is unsuitable for the purpose of quality assurance and stable production, and the use of a horizontal flat die is indispensable. As such, the present invention does not encompass the use of a circular die in which die holes are arranged circumferentially, not horizontally.

The diameter d of the die holes, which depends on the dimensions of pellets to be obtained, is usually approximately 2 to 5 mm, preferably 3 to 4 mm. As described above, the die holes need not have the same diameter d and the same land length L, but may be different in diameter d and land length L from one another.

The strand extruded from the horizontal flat die is introduced into the water bath provided with the guide roller so that it is cooled.

Fig. 1 is a conceptual view showing an example of a water-cooling step in the present invention. A strand 2 extruded from the horizontal flat die 1 of the extruder is cooled while travelling under water in a water bath 3. A first guide roller 4 allows the strand 2 to be submerged below the water surface 5 in the water bath 3. The guide roller may also include a second guide roller 6 and an n-th guide roller 7 provided downstream. Finally, the strand 2 is allowed to come out of the water bath 3 at a position E.

The strand 2 from a center position A of the die hole in the center of the flat die 1 is introduced into water in the water bath 3 and comes in contact with the first guide roller 4 at a position C. Before reaching the position C, the strand 2 also travels through the air in an almost molten state while vibrating. This vibration is inevitable and mainly vertical vibration (fundamental vibration with a single antinode) that has nodes at both ends, which correspond to the center position A of the die hole in the center of the flat die 1 and the position C where the strand comes in contact with the first guide roller. This vibration puts the strand under tension, making the strand stretched further and flattened. Since the tension generated by this vibration is periodic, the strand varies in aspect ratio in the strand direction, resulting in pellets having widely varying aspect ratios, that is, aspect ratios with a higher standard deviation. This vibration increases with the distance between A and C, followed by an increase in tension and aspect ratio. To avoid this, the distance between A and C (the A-C distance) is required to be 30 cm or less, preferably 28 cm or less, more preferably 25 cm or less, and still more preferably 20 cm or less. Meanwhile, if the A-C distance is too short, the strand is forced to come in contact with the first guide roller in a hot molten state and thus is likely to have a larger aspect ratio. On this account, the A-C distance is required to be 7 cm or more, preferably 10 cm or more, more preferably 12 cm or more, and still more preferably 15 cm or more.

The distance between a point B where the strand 2 reaches the water surface 5 in the water bath 3 and the position C where the strand 2 comes in contact with the first guide roller 4 (the B-C distance) is required to be within a range of 10% to 60% of the A-C distance. If the B-C distance is shorter than 10% of the A-C distance, the strand is insufficiently cooled and is bent by the first guide roller in a semi-molten state, whereby it is easily flattened. The B-C distance is preferably 12% or more, more preferably 15% or more, and still more preferably 20% or more, of the A-C distance. If the B-C distance is longer than 60% of the A-C distance, the strand is under tension due to the resistance in water, so that it is likely to be flattened. The B-C distance is preferably 55% or less of the A-C distance.

The following is a supplementary explanation of the contact positions C, D and the like. Since each of the guide rollers usually has a columnar shape with a diameter, the strand forms an arc shape when in contact with the guide roller. As such, each of the contact positions C, D and the like is defined as the position of the center of the arc of the arc-shaped strand (i.e., the position at which the arc is divided in half).

In addition to the positioning of A, B and C, it is necessary to allow the strand through the die hole at an end of the flat die to have a temperature lower than the strand through the die hole in the center of the flat die by 4°C to 14°C. The lower limit of the temperature difference is preferably 4.5°C or more, more preferably 5°C or more. The upper limit of the temperature difference is preferably 13°C or less, more preferably 12°C or less. If the temperature difference is more than 14°C, the strand is under different tension in the center and at the end, resulting in pellets having widely varying aspect ratios with a higher standard deviation. In addition, these pellets have a larger average aspect ratio. If the temperature difference is less than 4°C, the resultant pellets tend to have a larger aspect ratio, although the cause of this has yet to be identified. It is presumed that when the strand temperature varies less in the horizontal direction of the flat die, the strand is under the same tension and vibrates vertically at a uniform frequency in the horizontal direction, and this vibration propagates to the first guide roller, which in turn vibrates synchronously with the vibrating strand, causing the entire strand to vibrate further.

As described above, it is necessary to set the A-C distance and the B-C distance properly, use the horizontal flat die, and set the strand temperature difference between the center and the end of the die to the above-described predetermined value by temperature setting of the die holder and the flange. This makes it possible to obtain pellets having a small average aspect ratio with a low standard deviation, as shown in examples to be described later. The temperature of the die holder and the flange is approximately 250°C to 300°C for a polyester resin composition such as a polycarbonate resin composition, a polyamide resin composition, or polybutylene terephthalate, and is approximately 180°C to 220°C for a polyacetal resin composition.

The aspect ratio of pellets, which is required to be 0.2 or less on average, is preferably 0.15 or less, more preferably less than 0.10, still more preferably 0.08 or less, 0.07 or less, 0.06 or less, and particularly preferably 0.05 or less.

The standard deviation of the aspect ratio is preferably not more than half the average aspect ratio. If the standard deviation is higher than half the average aspect ratio, such pellets are likely to vary in mobility and be retained in downstream processes.

In order to obtain pellets having a smaller aspect ratio with less variation, the second guide roller 6 should be located downstream of the first guide roller 4 as shown in Fig. 2. Thus, the strand is introduced into water in the water bath by the two guide rollers. It is preferable that the second guide roller 6 is located deeper than the first guide roller 4 in the water bath. This configuration allows the first guide roller 4 to apply less tension on the strand 2, leading to suppressed vertical vibration of the strand 2, thereby producing pellets having a smaller aspect ratio with less variation.

The strand 2 comes in contact with the second guide roller 6 at a position D. The distance between the position C where the strand comes in contact with the first guide roller and the position D (the C-D distance) is preferably 4 to 30 cm. If the C-D distance is longer than 30 cm, the strand 2 is under greater tension due to the resistance of water in the water bath 3 and the second guide roller 6. This is unfavorable because the aspect ratio of the strand, which mostly depends on the position of the first guide roller, also increases with the tension applied by the second guide roller 6 if the strand is insufficiently solidified by the first guide roller. The C-D distance is more preferably 20 cm or less.

Additionally, in order to obtain pellets having a further smaller aspect ratio, it is necessary for the strand 2 to form a large angle Θ before and after the first guide roller 4. If the angle Θ is small, the strand 2 is under strong tension and is subject to a strong force applied by the roller in a direction in which the strand 2 is crushed. The angle Θ is preferably 130° or more, more preferably 140° or more, still more preferably 145° or more, 150° or more, 155° or more, and particularly preferably 160° or more, and is preferably less than 180°. The strand 2 is allowed to form a large angle Θ when the second guide roller 6 is located deeper than the first guide roller 4.

Each of the guide rollers preferably has a diameter of 1 cm or more and 10 cm or less. If the diameter is smaller than 1 cm, the strand is forcibly bent and is easily flattened. If the diameter is larger than 10 cm, it becomes difficult to optionally modify the distances between the guide rollers. The diameter is more preferably 2 to 8 cm, still more preferably 3 to 7 cm. The guide roller preferably rotates, but does not have to rotate, along the strand, and may be in the form of a columnar or round bar.

The distance between the position B and the position E is preferably 30 cm or more and 2 m or less, more preferably 40 cm or more and 1.5 m or less, for a thermoplastic resin containing a reinforcing filler. Meanwhile, the distance is preferably 40 cm or more and 3 m or less, more preferably 50 cm or more and 2 m or less, for a composition containing no reinforcing filler, through which heat does not transfer easily.

The strand allowed to come out of the water bath 3 is fed to a pelletizer, where it is cut into pellets. The pellets preferably have a length of 2 to 5 mm and a diameter of 2 to 5 mm.

The production method of the present invention is applicable, without limitation, to any thermoplastic resin, including a crystalline thermoplastic resin and a non-crystalline thermoplastic resin. Examples of the thermoplastic resin include: polycarbonate resin; polyamide resins such as polyamide 6, polyamide 66, and polyamide MXD; polyester resins such as polybutylene terephthalate and polyethylene terephthalate; polyacetal resin; polyphenylene ether resin; polyolefin resin; polystyrene-based resin; vinyl chloride-based resin; and acrylic-based resin. These resins may be used alone or in combination with one or more of the other resins. Among these thermoplastic resins, so-called engineering plastics, such as polycarbonate resin, polyamide resin, polybutylene terephthalate resin, polyacetal resin, and polyphenylene ether resin, are particularly effectively used to demonstrate the effect of the present invention, since these thermoplastic resins, having a high melt-kneading temperature, are liable to be flattened by being subjected to a significant difference in temperature between the extruder and the cooling water bath.

The reinforcing filler that may be contained in the thermoplastic resin is an agent to improve the strength and stiffness of the thermoplastic resin, and may be of any form such as a fibrous form, a sheet form, a granular form, or an amorphous form.

In the case of the reinforcing filler in a fibrous form, it may be either inorganic or organic. Examples of the fibrous reinforcing filler include: inorganic fiber such as glass fiber, carbon fiber, silica-alumina fiber, zirconia fiber, boron fiber, boron nitride fiber, silicon nitride potassium titanate fiber, metal fiber, and wollastonite; and organic fiber such as fluorine resin fiber and aramid fiber. The fibrous reinforcing filler is preferably inorganic fiber, particularly preferably glass fiber.

The content of the reinforcing filler, when contained, is preferably approximately 5 to 50 parts by mass relative to 100 parts by mass of the thermoplastic resin. One reinforcing filler may be contained or alternatively two or more reinforcing fillers may be contained in combination.

In addition to the reinforcing filler, the thermoplastic resin may also contain another additive of any type without limitation. Examples include a stabilizer, an antioxidant, a flame retardant, an auxiliary flame retardant, a mold release agent, a lubricant, an ultraviolet absorber, an antistatic agent, a plasticizer, a dye, and a pigment. Usually, the content of such an additive is preferably 0.01 to 50 mass%, for example, particularly preferably 0.01 to 40 mass%.

### [Examples]

Hereinafter, the present invention will be described more specifically by way of examples. However, the present invention is not limited to the following examples, and any modifications can be made within the scope of the gist of the present invention.

Table 1 below shows thermoplastic resins and reinforcing fillers used as raw materials in examples and comparative examples.

**[Table 1]**

| Component | Abbr. | | Formulation 1 (mass%) | Formulation 2 (mass%) | Formulation 3 (mass%) | Formulation 4 (mass%) |
|---|---|---|---|---|---|---|
| Polyamide resin | PA1 | Nylon MXD6 | 40 | | | |
| | | "MX NYLON #6000" from Mitsubishi Gas Chemical Co. | | | | |
| | PA2 | Nylon 66 | 30 | | | |
| | | "U4800" from INVISTA | | | | |
| PBT resin | PBT1 | Polybutylene terephthalate resin "NOVADURAN^{™} 5008" from Mitsubishi Engineering-Plastics Co. | | 80 | | |
| | | Inherent viscosity: 0.85 dl/g | | | | |
| | PBT2 | Polybutylene terephthalate resin "NOVADURAN^{™} 5020" from Mitsubishi Engineering-Plastics Co. | | | 100 | |
| | | Inherent viscosity: 120 dl/g | | | | |
| Polycarbonate resin | PC | Bisphenol A type aromatic polycarbonate resin "lupilon^{™} S3000F" from Mitsubishi Engineering-plastics Co. | | | | 90 |
| | | Melt viscosity: 21500 | | | | |
| Reinforcing filler | GF1 | Glass fiber | 30 | | | |
| | | "ECS 03 T-275H" from Nippon Electric Glass Co. | | | | |
| | | Diameter: 10 µm | | | | |
| | GF2 | Glass fiber | | 20 | | 10 |
| | | "ECS 03 T-187" from Nippon Electric Glass Co. | | | | |
| | | Diameter: 13 µm | | | | |

In the examples and comparative examples below, an intermeshing co-rotating vented twin screw extruder ("TEX44αIII" manufactured by The Japan Steel Works, Ltd., cylinder diameter D = 47 mm) was used.

The screw configuration is shown in Fig. 7.

A feed cylinder (feed barrel) was located at a cylinder position C1; vent cylinders were located at C7 and C12; an open vent was located at C7; a vacuum vent was located at C12; and a side feed cylinder was located at C9. A first kneading portion where the thermoplastic resin was melt-kneaded was located between positions C5 and C6, and its screw configuration was RRNNL (R is a forward conveying kneading disc element; N is an orthogonal kneading disc element; and L is a reverse conveying screw), each of which was 1 Ds long (1 Ds = 44 mm) with five paddles. A glass fiber as the reinforcing filler was side-fed from C9. A second kneading portion where the glass fiber was kneaded was located between positions C10 and C11. The second kneading portion included R that was 1 Ds long with five paddles, and three back mixing screws, each of which was equally 1 Ds long (with a lead of 0.25 Ds) as shown in Fig. 7.

A horizontal flat die used in the present invention had 10 die holes arranged linearly in the horizontal direction, each of which had a hole diameter of 3.8 mm and a land length of 20 mm. The temperature of a strand was measured with contact thermocouples (thermometer DP-350 and thermocouple JB-15, ELEMENT: K, manufactured by RKC Instrument Inc.)

### Example 1

80 kg/h of polyamide resin PA1 and 60 kg/h of polyamide resin PA2 were fed to the feed barrel at the position C1 of the cylinder of the extruder ("TEX44αIII" manufactured by The Japan Steel Works, Ltd.), and 60 kg/h of glass fiber (GF1) was fed to the side feed cylinder at C9 from a side feed hopper. The amount of the raw materials fed was 200 kg/h in total; the screw rotation speed was 250 rpm; and the cylinder temperature was set to 260°C. The temperature of the die holder was set to 280°C, and the flange was also set at the same temperature as the die holder. In each of the examples and comparative examples below, the flange was set at the same temperature as the die holder.

The average temperature of two strands in the center of the horizontal flat die was 321°C, and the temperature of two strands at both ends was 313°C. The temperature difference therebetween was 8°C.

The height of the water surface in the cooling water bath and the position of the first guide roller were adjusted so that the A-C distance was 17 cm and the B-C distance was 35% of the A-C distance. The second guide roller was located on the same level as the first guide roller in the water bath (this is described as "Same" in the table below.) The distance between the position C where the strand comes in contact with the first guide roller and the position D where the strand comes in contact with the second guide roller (the C-D distance) was 20 cm.

The third guide roller was located downstream of the second guide roller to allow the strand to come to the water surface. The distance between the position B where the strand reached the water surface and the position E where the strand was allowed to come to the water surface was 1 m. Each of the guide rollers had a diameter of 5 cm.

The strand formed an angle of 140° before and after the first guide roller.

The strand cooled in the water bath was cut with a pelletizer into pellets, each having a length of 3 mm and a diameter of 3 mm. 20 pellets were randomly selected to measure the average aspect ratio. The measurement resulted in a favorable average aspect ratio of 0.10.

Table 2 below shows the standard deviation of the aspect ratio, the standard deviation of the aspect ratio/the average aspect ratio, and the evaluation result.

The evaluation in the table was based on the following criteria:
A: Average aspect ratio of less than 0.1;
B: Average aspect ratio of 0.1 or more and 0.15 or less;
C: Average aspect ratio of more than 0.15 and 0.2 or less;
D: Average aspect ratio of more than 0.2.

### Example 2

Pellets were produced in the same manner as in Example 1, except that the B-C distance was 12% of the A-C distance, which was maintained at 17 cm. The results are shown in Table 2.

### Example 3

Pellets were produced in the same manner as in Example 1, except that the B-C distance was 47% of the A-C distance, which was maintained at 17 cm. The results are shown in Table 2.

### Example 4

Pellets were produced in the same manner as in Example 1, except that the second guide roller was located 5 cm below the first guide roller, which resulted in the C-D distance being 21 cm and the angle formed by the strand before and after the first guide roller being 155°. The results are shown in Table 2.

### Example 5

Pellets were produced in the same manner as in Example 1, except that the second guide roller was located 10 cm below the first guide roller, which resulted in the C-D distance being 23 cm and the angle formed by the strand before and after the first guide roller being 168°. The results are shown in Table 2.

### Example 6

Pellets were produced in the same manner as in Example 1, except that the A-C distance was 12 cm, and the B-C distance was 50% of the A-C distance. The results are shown in Table 2.

### Example 7

Pellets were produced in the same manner as in Example 1, except that the A-C distance was 27 cm, and the B-C distance was 22% of the A-C distance. The results are shown in Table 2.

### Example 8

Pellets were produced in the same manner as in Example 1, except that 160 kg/h of polybutylene terephthalate resin PBT1 was fed to the feed barrel at C1 of the extruder ("TEX44αIII" manufactured by The Japan Steel Works, Ltd.), and 40 kg/h of glass fiber (GF2) was fed to the side feed cylinder at C9 from the side feed hopper. The results are shown in Table 2.

### Example 9

Pellets were produced in the same manner as in Example 1, except that 200 kg/h of polybutylene terephthalate resin PBT2 was fed to the feed barrel at C1 of the extruder ("TEX44αIII" manufactured by The Japan Steel Works, Ltd.), and the glass fiber was not fed. The results are shown in Table 2.

### Example 10

Pellets were produced in the same manner as in Example 1, except that 180 kg/h of polycarbonate resin PC was fed to the feed barrel at C1 of the extruder ("TEX44αIII" manufactured by The Japan Steel Works, Ltd.), and 20 kg/h of glass fiber (GF2) was fed to the side feed cylinder at C9 from the side feed hopper. The results are shown in Table 2.

### Comparative Example 1

Pellets were produced in the same manner as in Example 1, except that the B-C distance was 6% of the A-C distance, which was maintained at 17 cm. The results are shown in Table 3.

### Comparative Example 2

Pellets were produced in the same manner as in Example 1, except that the B-C distance was 71% of the A-C distance, which was maintained at 17 cm. The results are shown in Table 3.

### Comparative Example 3

Pellets were produced in the same manner as in Example 1, except that the A-C distance was 5 cm, and the B-C distance was 40% of the A-C distance. The results are shown in Table 3.

### Comparative Example 4

Pellets were produced in the same manner as in Example 1, except that the A-C distance was 32 cm, and the B-C distance was 19% of the A-C distance. The results are shown in Table 3.

### Comparative Example 5

Pellets were produced in the same manner as in Example 1, except that the temperature of the die holder and the flange was 310°C, which resulted in the strand temperature in the die center being 328°C and the strand temperature at the die end being 325°C with a difference therebetween of 3°C. The results are shown in Table 3.

### Comparative Example 6

Pellets were produced in the same manner as in Example 1, except that the temperature of the die holder and the flange was 240°C, which resulted in the strand temperature in the die center being 316°C and the strand temperature at the die end being 299°C with a difference therebetween of 17°C. The results are shown in Table 3.

**[Table 2]**

| | Example | | | | | | | | | |
|---|---|---|---|---|---|---|---|---|---|---|
| | 1 | 2 | 3 | 4 | 5 | 6 | 7 | 8 | 9 | 10 |
| Formulation | 1 | 1 | 1 | 1 | 1 | 1 | 1 | 2 | 3 | 4 |
| A-C distance (cm) | 17 | 17 | 17 | 17 | 17 | 12 | 27 | 17 | 17 | 17 |
| B-C distance (cm) | 6 | 2 | 8 | 6 | 6 | 6 | 6 | 6 | 6 | 6 |
| B-C distance/A-C distance ratio (%) | 35 | 12 | 47 | 35 | 35 | 50 | 22 | 35 | 35 | 35 |
| Temp. of die holder | 280 | 280 | 280 | 280 | 280 | 280 | 280 | 280 | 280 | 280 |
| Strand temp. in die center (C°) | 321 | 321 | 321 | 321 | 321 | 321 | 321 | 305 | 307 | 318 |
| Strand temp. at die end (C°) | 313 | 313 | 313 | 313 | 313 | 313 | 313 | 299 | 301 | 310 |
| Temperature difference (C°) | 8 | 8 | 8 | 8 | 8 | 8 | 8 | 6 | 6 | 8 |
| Height of 2nd guide roller relative to 1st guide roller | Same | Same | Same | 5 cm below | 10 cm below | Same | Same | 5 cm below | 5 cm below | 5 cm below |
| Angle formed by strand before and after 1st guide roller (°) | 140 | 140 | 140 | 155 | 168 | 140 | 140 | 155 | 155 | 155 |
| Average aspect ratio of pellets | 0.10 | 0.15 | 0.15 | 0.06 | 0.03 | 0.14 | 0.18 | 0.05 | 0.06 | 0.07 |
| Standard deviation of aspect ratio | 0.04 | 0.05 | 0.06 | 0.02 | 0.01 | 0.04 | 0.06 | 0.02 | 0.02 | 0.02 |
| Standard deviation of aspect ratio/averge aspect ratio | 0.40 | 0.33 | 0.40 | 0.33 | 0.33 | 0.29 | 0.33 | 0.40 | 0.33 | 0.29 |
| Evaluation | B | B | B | A | A | B | C | A | A | A |

**[Table 3]**

| | Comparative Example | | | | | |
|---|---|---|---|---|---|---|
| | 1 | 2 | 3 | 4 | 5 | 6 |
| Formulation | 1 | 1 | 1 | 1 | 1 | 1 |
| A-C distance (cm) | 17 | 17 | 5 | 32 | 17 | 17 |
| B-C distance (cm) | 1 | 12 | 2 | 6 | 6 | 6 |
| B-C distance/A-C distance ratio (%) | 6 | 71 | 40 | 19 | 35 | 35 |
| Temp. of die holder | 280 | 280 | 280 | 280 | 310 | 240 |
| Strand temp. in die center (C°) | 321 | 321 | 321 | 321 | 328 | 316 |
| Strand temp. at die end (C°) | 313 | 313 | 313 | 313 | 325 | 299 |
| Temperature difference (C°) | 8 | 8 | 8 | 8 | 3 | 17 |
| Height of 2nd guide roller relative to 1st guide roller | Same | Same | Same | Same | Same | Same |
| Angle formed by strand before and after 1st guide roller (°) | 140 | 140 | 140 | 140 | 140 | 140 |
| Average aspect ratio of pellets | 0.25 | 0.23 | 0.23 | 0.27 | 0.23 | 0.24 |
| Standard deviation of aspect ratio | 0.13 | 0.12 | 0.12 | 0.24 | 0.10 | 0.23 |
| Standard deviation of aspect ratio/averge aspect ratio | 0.52 | 0.52 | 0.52 | 0.89 | 0.43 | 0.96 |
| Evaluation | D | D | D | D | D | D |

### Industrial Applicability

The production method of the present invention makes it possible to produce resin pellets having a small aspect ratio uniformly without variation, and the thus-produced resin pellets can be stably molded into various products.

### Reference Signs List

- 1: Horizontal flat die
- 2: Strand
- 3: Cooling water bath
- 4: First guide roller
- 5: Water surface in water bath
- 6: Second guide roller
- 7: N-th guide roller
- 21: Extruder screw
- 22: Breaker plate
- 23: Die holder
- 24: Flange
- 25: Manifold portion
- 26, 27: Thermocouple
- 31, 32, 33: Die hole

## Claims

1. A production method for resin pellets, comprising: extruding a thermoplastic resin or a composition containing a thermoplastic resin and a reinforcing filler from a die at a front end of an extruder in a form of a strand; introducing the strand into a water bath provided with a guide roller so that it is cooled; and cutting the cooled strand into resin pellets, wherein
the die is a horizontal flat die, and the strand through a die hole at an end of the flat die has a temperature lower than the strand through a die hole in a center of the flat die by 4°C to 14°C, and
a distance between a center position A of the die hole in the center of the flat die and a position C where the strand comes in contact with a first guide roller (an A-C distance) is 7 to 30 cm, and a distance between a position B where the strand reaches a water surface and the position C (a B-C distance) is within a range of 10% to 60% of the A-C distance.

2. The production method of claim 1, wherein the water bath is provided with a second guide roller downstream of the first guide roller such that the second guide roller is located deeper than the first guide roller in the water bath.

3. The production method of claim 1 or 2, wherein a distance between the position C and a position D where the strand comes in contact with the second guide roller is 4 to 30 cm.

4. The production method of any one of claims 1 to 3, wherein the strand forms an angle of 130° or more and less than 180° before and after the first guide roller.

5. The production method of any one of claims 1 to 4, wherein the thermoplastic resin is a crystalline thermoplastic resin.

6. A resin pellet produced by the production method of any one of claims 1 to 5.
